# EUROPEAN PATENT SPECIFICATION

(11) **EP 3 724 820 B1**
(45) Date of publication and mention of the grant of the patent: **25.11.2026**
(21) Application number: 19703571.0
(22) Date of filing: 18.01.2019
(51) Int. Cl.: G06N 3/004, G06N 3/006, G06N 3/088, G06N 3/0442, G06N 3/092, G06N 3/02

(54) **GENERATING OBJECTIVES FOR OBJECTIVE-EFFECTUATORS IN SYNTHESIZED REALITY SETTINGS**
ERZEUGUNG VON ZIELEN FÜR ZIELEFFEKTUATOREN IN UMGEBUNGEN DER SYNTHETISCHEN REALITÄT
GÉNÉRATION D'OBJECTIFS POUR DES OBJECTIFS-EFFECTEURS DANS DES RÉGLAGES DE RÉALITÉ SYNTHÉTISÉ

(30) Priority: 22.01.2018 US 201862620355 P; 20.09.2018 US 201862734171 P
(43) Date of publication of application: 21.10.2020
(73) Proprietor: Apple Inc., Cupertino, CA 95014 (US)
(72) Inventor: SAINI, Amritpal Singh, Sunnyvale, CA 94085 (US); SOARES, Olivier, Sunnyvale, CA 94085 (US); RICHTER, Ian M., Sunnyvale, CA 94085 (US)
(74) Representative: Barton, Russell Glen
(86) International application number: PCT/US2019/014152
(87) International publication number: WO 2019/143907

(56) References cited:
- US-A1- 2006 048 092
- US-A1- 2008 163 054
- ROBIN BAUMGARTEN ET AL: "Combining AI Methods for Learning Bots in a Real-Time Strategy Game", INTERNATIONAL JOURNAL OF COMPUTER GAMES TECHNOLOGY, vol. 2009, 1 January 2009 (2009-01-01), pages 1 - 10, XP055587674, ISSN: 1687-7047, DOI: 10.1155/2009/129075
- GELENBE E ET AL: "Simulating autonomous agents in augmented reality", JOURNAL OF SYSTEMS & SOFTWARE, ELSEVIER NORTH HOLLAND, NEW YORK, NY, US, vol. 74, no. 3, 1 February 2005 (2005-02-01), pages 255 - 268, XP027636483, ISSN: 0164-1212, [retrieved on 20050201]
- MIRANDA F R ET AL: "An artificial life approach for the animation of cognitive characters", COMPUTERS AND GRAPHICS, ELSEVIER, GB, vol. 25, no. 6, 1 December 2001 (2001-12-01), pages 955 - 964, XP027289237, ISSN: 0097-8493, [retrieved on 20011201]

## Description

### TECHNICAL FIELD

The present disclosure generally relates to generating objectives for objective- effectuators in synthesized reality settings.

### BACKGROUND

Some devices are capable of generating and presenting synthesized reality settings. Some synthesized reality settings include virtual settings that are synthesized replacements of physical settings. Some synthesized reality settings include augmented settings that are modified versions of physical settings. Some devices that present synthesized reality settings include mobile communication devices such as smartphones, head-mountable displays (HMDs), eyeglasses, heads-up displays (HUDs), and optical projection systems. Most previously available devices that present synthesized reality settings are ineffective at presenting representations of certain objects. For example, some previously available devices that present synthesized reality settings are unsuitable for presenting representations of objects that are associated with an action.
"Simulating autonomous agents in augmented reality" by Gelenbe E et al describes generating a simulation that incorporates synthetic objects in video sequences representing a real scene for use in critical applications such as military and medical simulations.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figures 1A and 1B are diagrams of example operating environments in accordance with some implementations.
Figure 2 is a block diagram of an example system in accordance with some implementations.
Figure 3A is a block diagram of an example emergent content engine in accordance with some implementations.
Figure 3B is a block diagram of an example neural network in accordance with some implementations.
Figures 4A-4E are flowchart representations of a method of generating content for synthesized reality settings in accordance with some implementations.
Figure 5 is a block diagram of a server system enabled with various components of the emergent content engine in accordance with some implementations.
Figure 6 is a diagram of a character being captured in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### SUMMARY

The invention is set out in independent claims 1, 14 and 15. Preferred aspects of the invention are set out in the dependent claims.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

A physical setting refers to a world that individuals can sense and/or with which individuals can interact without assistance of electronic systems. Physical settings (e.g., a physical forest) include physical elements (e.g., physical trees, physical structures, and physical animals). Individuals can directly interact with and/or sense the physical setting, such as through touch, sight, smell, hearing, and taste.

In contrast, a synthesized reality (SR) setting refers to an entirely or partly computer-created setting that individuals can sense and/or with which individuals can interact via an electronic system. In SR, a subset of an individual's movements is monitored, and, responsive thereto, one or more attributes of one or more virtual objects in the SR setting is changed in a manner that conforms with one or more physical laws. For example, a SR system may detect an individual walking a few paces forward and, responsive thereto, adjust graphics and audio presented to the individual in a manner similar to how such scenery and sounds would change in a physical setting. Modifications to attribute(s) of virtual object(s) in a SR setting also may be made responsive to representations of movement (e.g., audio instructions).

An individual may interact with and/or sense a SR object using any one of his senses, including touch, smell, sight, taste, and sound. For example, an individual may interact with and/or sense aural objects that create a multi-dimensional (e.g., three dimensional) or spatial aural setting, and/or enable aural transparency. Multi-dimensional or spatial aural settings provide an individual with a perception of discrete aural sources in multi-dimensional space. Aural transparency selectively incorporates sounds from the physical setting, either with or without computer-created audio. In some SR settings, an individual may interact with and/or sense only aural objects.

One example of SR is virtual reality (VR). A VR setting refers to a simulated setting that is designed only to include computer-created sensory inputs for at least one of the senses. A VR setting includes multiple virtual objects with which an individual may interact and/or sense. An individual may interact and/or sense virtual objects in the VR setting through a simulation of a subset of the individual's actions within the computer-created setting, and/or through a simulation of the individual or his presence within the computer-created setting.

Another example of SR is mixed reality (MR). A MR setting refers to a simulated setting that is designed to integrate computer-created sensory inputs (e.g., virtual objects) with sensory inputs from the physical setting, or a representation thereof. On a reality spectrum, a mixed reality setting is between, and does not include, a VR setting at one end and an entirely physical setting at the other end.

In some MR settings, computer-created sensory inputs may adapt to changes in sensory inputs from the physical setting. Also, some electronic systems for presenting MR settings may monitor orientation and/or location with respect to the physical setting to enable interaction between virtual objects and real objects (which are physical elements from the physical setting or representations thereof). For example, a system may monitor movements so that a virtual plant appears stationery with respect to a physical building.

One example of mixed reality is augmented reality (AR). An AR setting refers to a simulated setting in which at least one virtual object is superimposed over a physical setting, or a representation thereof. For example, an electronic system may have an opaque display and at least one imaging sensor for capturing images or video of the physical setting, which are representations of the physical setting. The system combines the images or video with virtual objects, and displays the combination on the opaque display. An individual, using the system, views the physical setting indirectly via the images or video of the physical setting, and observes the virtual objects superimposed over the physical setting. When a system uses image sensor(s) to capture images of the physical setting, and presents the AR setting on the opaque display using those images, the displayed images are called a video pass-through. Alternatively, an electronic system for displaying an AR setting may have a transparent or semi-transparent display through which an individual may view the physical setting directly. The system may display virtual objects on the transparent or semi-transparent display, so that an individual, using the system, observes the virtual objects superimposed over the physical setting. In another example, a system may comprise a projection system that projects virtual objects into the physical setting. The virtual objects may be projected, for example, on a physical surface or as a holograph, so that an individual, using the system, observes the virtual objects superimposed over the physical setting.

An augmented reality setting also may refer to a simulated setting in which a representation of a physical setting is altered by computer-created sensory information. For example, a portion of a representation of a physical setting may be graphically altered (e.g., enlarged), such that the altered portion may still be representative of but not a faithfully- reproduced version of the originally captured image(s). As another example, in providing video pass-through, a system may alter at least one of the sensor images to impose a particular viewpoint different than the viewpoint captured by the image sensor(s). As an additional example, a representation of a physical setting may be altered by graphically obscuring or excluding portions thereof.

Another example of mixed reality is augmented virtuality (AV). An AV setting refers to a simulated setting in which a computer-created or virtual setting incorporates at least one sensory input from the physical setting. The sensory input(s) from the physical setting may be representations of at least one characteristic of the physical setting. For example, a virtual object may assume a color of a physical element captured by imaging sensor(s). In another example, a virtual object may exhibit characteristics consistent with actual weather conditions in the physical setting, as identified via imaging, weather-related sensors, and/or online weather data. In yet another example, an augmented reality forest may have virtual trees and structures, but the animals may have features that are accurately reproduced from images taken of physical animals.

Many electronic systems enable an individual to interact with and/or sense various SR settings. One example includes head mounted systems. A head mounted system may have an opaque display and speaker(s). Alternatively, a head mounted system may be designed to receive an external display (e.g., a smartphone). The head mounted system may have imaging sensor(s) and/or microphones for taking images/video and/or capturing audio of the physical setting, respectively. A head mounted system also may have a transparent or semitransparent display. The transparent or semi-transparent display may incorporate a substrate through which light representative of images is directed to an individual's eyes. The display may incorporate LEDs, OLEDs, a digital light projector, a laser scanning light source, liquid crystal on silicon, or any combination of these technologies. The substrate through which the light is transmitted may be a light waveguide, optical combiner, optical reflector, holographic substrate, or any combination of these substrates. In one embodiment, the transparent or semitransparent display may transition selectively between an opaque state and a transparent or semi-transparent state. In another example, the electronic system may be a projection-based system. A projection-based system may use retinal projection to project images onto an individual's retina. Alternatively, a projection system also may project virtual objects into a physical setting (e.g., onto a physical surface or as a holograph). Other examples of SR systems include heads up displays, automotive windshields with the ability to display graphics, windows with the ability to display graphics, lenses with the ability to display graphics, headphones or earphones, speaker arrangements, input mechanisms (e.g., controllers having or not having haptic feedback), tablets, smartphones, and desktop or laptop computers.

The present disclosure provides methods, systems, and/or devices for generating content for synthesized reality settings. An emergent content engine generates objectives for objective-effectuators, and provides the objectives to corresponding objective- effectuator engines so that the objective-effectuator engines can generate actions that satisfy the objectives. The objectives generated by the emergent content engine indicate plots or story lines for which the objective-effectuator engines generate actions. Generating objectives enables presentation of dynamic objective-effectuators that perform actions as opposed to presenting static objective-effectuators, thereby enhancing the user experience and improving the functionality of the device presenting the synthesized reality setting.

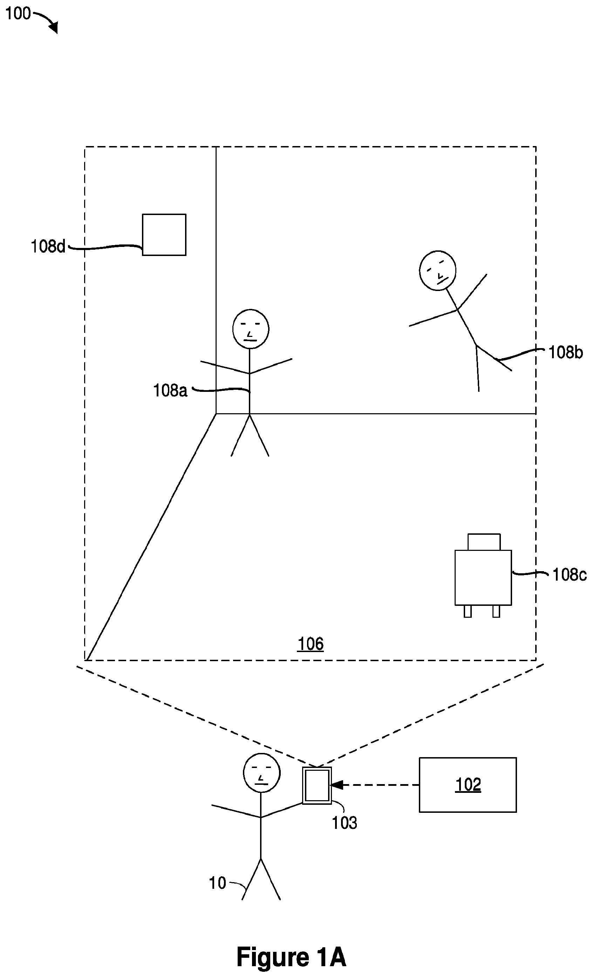

Figure 1A is a block diagram of an example operating environment 100 in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the operating environment 100 includes a controller 102 and an electronic device 103. In the example of Figure 1A, the electronic device 103 is being held by a user 10. In some implementations, the electronic device 103 includes a smartphone, a tablet, a laptop, or the like.

As illustrated in Figure 1A, the electronic device 103 presents a synthesized reality setting 106. In some implementations, the synthesized reality setting 106 is generated by the controller 102 and/or the electronic device 103. In some implementations, the synthesized reality setting 106 includes a virtual setting that is a synthesized replacement of a physical setting. In other words, in some implementations, the synthesized reality setting 106 is synthesized by the controller 102 and/or the electronic device 103. In such implementations, the synthesized reality setting 106 is different from the physical setting where the electronic device 103 is located. In some implementations, the synthesized reality setting 106 includes an augmented setting that is a modified version of a physical setting. For example, in some implementations, the controller 102 and/or the electronic device 103 modify (e.g., augment) the physical setting where the electronic device 103 is located in order to generate the synthesized reality setting 106. In some implementations, the controller 102 and/or the electronic device 103 generate the synthesized reality setting 106 by simulating a replica of the physical setting where the electronic device 103 is located. In some implementations, the controller 102 and/or the electronic device 103 generate the synthesized reality setting 106 by removing and/or adding items from the synthesized replica of the physical setting where the electronic device 103 is located.

In some implementations, the synthesized reality setting 106 includes various SR representations of objective-effectuators such as a boy action figure representation 108a, a girl action figure representation 108b, a robot representation 108c, and a drone representation 108d. In some implementations, the objective-effectuators represent characters from fictional materials such as movies, video games, comic, and novels. For example, the boy action figure representation 108a represents a 'boy action figure' character from a fictional comic, and the girl action figure representation 108b represents a 'girl action figure' character from a fictional video game. In some implementations, the synthesized reality setting 106 includes objective- effectuators that represent characters from different fictional materials (e.g., from different movies/games/comics/novels). In various implementations, the objective-effectuators represent things (e.g., tangible objects). For example, in some implementations, the objective- effectuators represent equipment (e.g., machinery such as planes, tanks, robots, cars, etc.). In the example of Figure 1A, the robot representation 108c represents a robot and the drone representation 108d represents a drone. In some implementations, the objective-effectuators represent things (e.g., equipment) from fictional material. In some implementations, the objective-effectuators represent things from a physical setting, including things located inside and/or outside of the synthesized reality setting 106.

In various implementations, the objective-effectuators perform one or more actions. In some implementations, the objective-effectuators perform a sequence of actions. In some implementations, the controller 102 and/or the electronic device 103 determine the actions that the objective-effectuators are to perform. In some implementations, the actions of the objective-effectuators are within a degree of similarity to actions that the corresponding characters/things perform in the fictional material. In the example of Figure 1A, the girl action figure representation 108b is performing the action of flying (e.g., because the corresponding 'girl action figure' character is capable of flying). In the example of Figure 1A, the drone representation 108d is performing the action of hovering (e.g., because drones in the real-world are capable of hovering). In some implementations, the controller 102 and/or the electronic device 103 obtain the actions for the objective-effectuators. For example, in some implementations, the controller 102 and/or the electronic device 103 receive the actions for the objective-effectuators from a remote server that determines (e.g., selects) the actions.

In various implementations, an objective-effectuator performs an action in order to satisfy (e.g., complete or achieve) an objective. In some implementations, an objective- effectuator is associated with a particular objective, and the objective-effectuator performs actions that improve the likelihood of satisfying that particular objective. In some implementations, SR representations of the objective-effectuators are referred to as object representations, for example, because the SR representations of the objective-effectuators represent various objects (e.g., real objects, or fictional objects). In some implementations, an objective-effectuator representing a character is referred to as a character objective-effectuator. In some implementations, a character objective-effectuator performs actions to effectuate a character objective. In some implementations, an objective-effectuator representing an equipment is referred to as an equipment objective-effectuator. In some implementations, an equipment objective-effectuator performs actions to effectuate an equipment objective. In some implementations, an objective effectuator representing an environment is referred to as an environmental objective-effectuator. In some implementations, an environmental objective effectuator performs environmental actions to effectuate an environmental objective.

In some implementations, the synthesized reality setting 106 is generated based on a user input from the user 10. For example, in some implementations, the electronic device 103 receives a user input indicating a terrain for the synthesized reality setting 106. In such implementations, the controller 102 and/or the electronic device 103 configure the synthesized reality setting 106 such that the synthesized reality setting 106 includes the terrain indicated via the user input. In some implementations, the user input indicates environmental conditions. In such implementations, the controller 102 and/or the electronic device 103 configure the synthesized reality setting 106 to have the environmental conditions indicated by the user input. In some implementations, the environmental conditions include one or more of temperature, humidity, pressure, visibility, ambient light level, ambient sound level, time of day (e.g., morning, afternoon, evening, or night), and precipitation (e.g., overcast, rain or snow).

In some implementations, the actions for the objective-effectuators are determined (e.g., generated) based on a user input from the user 10. For example, in some implementations, the electronic device 103 receives a user input indicating placement of the SR representations of the objective-effectuators. In such implementations, the controller 102 and/or the electronic device 103 position the SR representations of the objective-effectuators in accordance with the placement indicated by the user input. In some implementations, the user input indicates specific actions that the objective-effectuators are permitted to perform. In such implementations, the controller 102 and/or the electronic device 103 select the actions for the objective-effectuator from the specific actions indicated by the user input. In some implementations, the controller 102 and/or the electronic device 103 forgo actions that are not among the specific actions indicated by the user input.

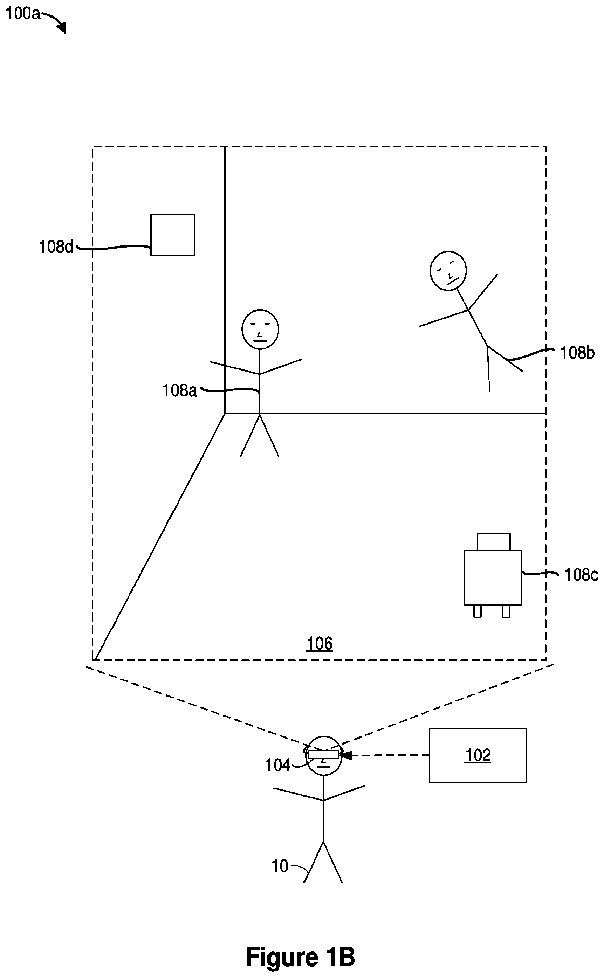

Figure 1B is a block diagram of an example operating environment 100a in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the operating environment 100a includes the controller 102 and a head-mountable device (HMD) 104. In the example of Figure 1B, the HMD 104 is worn by the user 10. In various implementations, the HMD 104 operates in substantially the same manner as the electronic device 103 shown in Figure 1A. In some implementations, the HMD 104 performs substantially the same operations as the electronic device 103 shown in Figure 1A. In some implementations, the HMD 104 includes a head-mountable enclosure. In some implementations, the head- mountable enclosure is shaped to form a receptacle for receiving an electronic device with a display (e.g., the electronic device 103 shown in Figure 1A). In some implementations, the HMD 104 includes an integrated display for presenting a synthesized reality experience to the user 10.

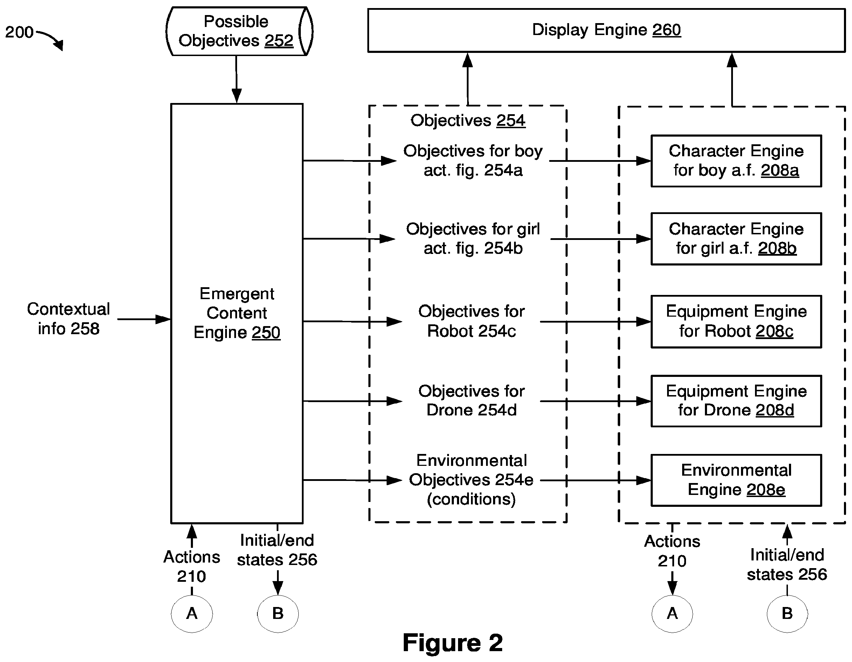

Figure 2 is a block diagram of an example system 200 that generates objectives for various objective-effectuators in a synthesized reality setting. For example, the system 200 generates objectives for the boy action figure representation 108a, the girl action figure representation 108b, the robot representation 108c, and/or the drone representation 108d shown in Figure 1A. In the example of Figure 2, the system 200 includes a boy action figure character engine 208a, a girl action figure character engine 208b, a robot equipment engine 208c, and a drone equipment engine 208d that generate actions 210 for the boy action figure representation 108a, the girl action figure representation 108b, the robot representation 108c, and the drone representation 108d, respectively. In some implementations, the system 200 also includes an environmental engine 208e, an emergent content engine 250, and a display engine 260.

In various implementations, the emergent content engine 250 generates respective objectives 254 for objective-effectuators that are in the synthesized reality setting and/or for the environment of the synthesized reality setting. In the example of Figure 2, the emergent content engine 250 generates boy action figure objectives 254a for the boy action figure representation 108a, girl action figure objectives 254b for the girl action figure representation 108b, robot objectives 254c for the robot representation 208c, drone objectives 254d for the drone representation 108d, and/or environmental objectives 254e (e.g., environmental conditions) for the environment of the synthesized reality setting 106. As illustrated in Figure 2, the emergent content engine 250 provides the objectives 254 to corresponding character/equipment/environmental engines. In the example of Figure 2, the emergent content engine 250 provides the boy action figure objectives 254a to the boy action figure character engine 208a, the girl action figure objectives 254b to the girl action figure character engine 208b, the robot objectives 254c to the robot equipment engine 208c, the drone objectives 254d to the drone equipment engine 208d, and the environmental objectives 254e to the environmental engine 208e.

The emergent content engine 250 generates the objectives 254 based on a function of possible objectives 252 (e.g., a set of predefined objectives), contextual information 258 characterizing the synthesized reality setting, and actions 210 provided by the character/equipment/ environmental engines. For example, in some implementations, the emergent content engine 250 generates the objectives 254 by selecting the objectives 254 from the possible objectives 252 based on the contextual information 258 and/or the actions 210. In some implementations, the possible objectives 252 are stored in a datastore. In some implementations, the possible objectives 252 are obtained from corresponding fictional source material (e.g., by scraping video games, movies, novels, and/or comics). For example, in some implementations, the possible objectives 252 for the girl action figure representation 108b include saving lives, rescuing pets, fighting crime, etc.

In some implementations, the emergent content engine 250 generates the objectives 254 based on the actions 210 provided by the character/equipment/environmental engines. In some implementations, the emergent content engine 250 generates the objectives 254 such that, given the actions 210, a probability of completing the objectives 254 satisfies a threshold (e.g., the probability is greater than the threshold, for example, the probability is greater than 80%). In some implementations, the emergent content engine 250 generates objectives 254 that have a high likelihood of being completed with the actions 210.

In some implementations, the emergent content engine 250 ranks the possible objectives 252 based on the actions 210. In some implementations, a rank for a particular possible objective 252 indicates the likelihood of completing that particular possible objective 252 given the actions 210. In such implementations, the emergent content engine 250 generates the objective 254 by selecting the highest N ranking possible objectives 252, where N is a predefined integer (e.g., 1, 3, 5, 10, etc.).

In some implementations, the emergent content engine 250 establishes initial/end states 256 for the synthesized reality setting based on the objectives 254. In some implementations, the initial/end states 256 indicate placements (e.g., locations) of various character/equipment representations within the synthesized reality setting. In some implementations, the synthesized reality setting is associated with a time duration (e.g., a few seconds, minutes, hours, or days). For example, the synthesized reality setting is scheduled to last for the time duration. In such implementations, the initial/end states 256 indicate placements of various character/equipment representations at/towards the beginning and/or at/towards the end of the time duration. In some implementations, the initial/end states 256 indicate environmental conditions for the synthesized reality setting at/towards the beginning/end of the time duration associated with the synthesized reality setting.

In some implementations, the emergent content engine 250 provides the objectives 254 to the display engine 260 in addition to the character/equipment/environmental engines. In some implementations, the display engine 260 determines whether the actions 210 provided by the character/equipment/environmental engines are consistent with the objectives 254 provided by the emergent content engine 250. For example, the display engine 260 determines whether the actions 210 satisfy objectives 254. In other words, in some implementations, the display engine 260 determines whether the actions 210 improve the likelihood of completing/achieving the objectives 254. In some implementations, if the actions 210 satisfy the objectives 254, then the display engine 260 modifies the synthesized reality setting in accordance with the actions 210. In some implementations, if the actions 210 do not satisfy the objectives 254, then the display engine 260 forgoes modifying the synthesized reality setting in accordance with the actions 210.

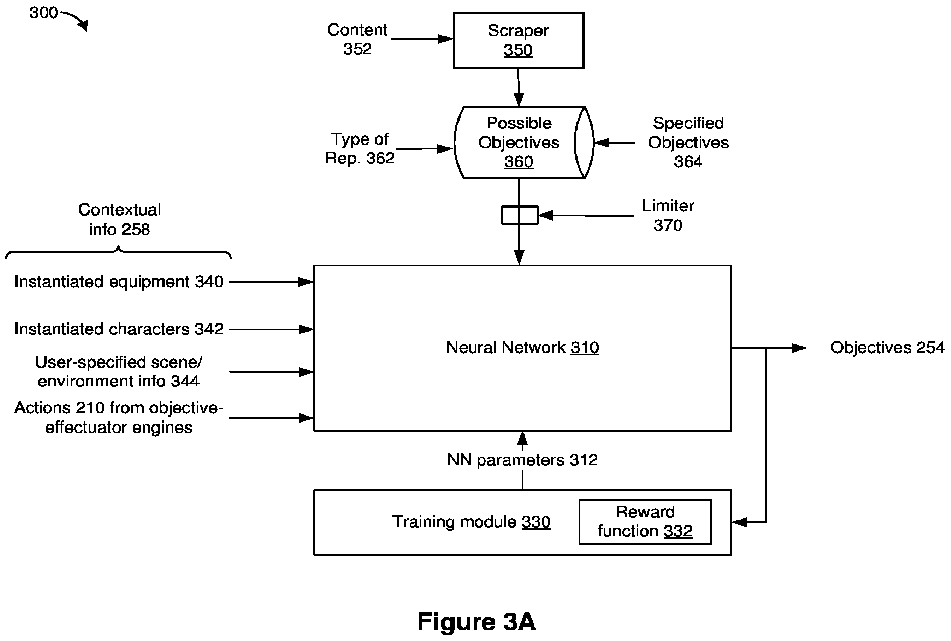

Figure 3A is a block diagram of an example emergent content engine 300 in accordance with some implementations. In some implementations, the emergent content engine 300 implements the emergent content engine 250 shown in Figure 2. In various implementations, the emergent content engine 300 generates the objectives 254 for various objective-effectuators that are instantiated in a synthesized reality setting (e.g., character/equipment representations such as the boy action figure representation 108a, the girl action figure representation 108b, the robot representation 108c, and/or the drone representation 108d shown in Figure 1A). In some implementations, at least some of the objectives 254 are for an environmental engine (e.g., the environmental engine 208e shown in Figure 2) that affects an environment of the synthesized reality setting.

In various implementations, the emergent content engine 300 includes a neural network system 310 ("neural network 310", hereinafter for the sake of brevity), a neural network training system 330 ("a training module 330", hereinafter for the sake of brevity) that trains (e.g., configures) the neural network 310, and a scraper 350 that provides possible objectives 360 to the neural network 310. In various implementations, the neural network 310 generates the objectives 254 (e.g., the objectives 254a for the boy action figure representation 108a, the objectives 254b for the girl action figure representation 108b, the objectives 254c for the robot representation 108c, the objectives 254d for the drone representation 108d, and/or the environmental objectives 254e shown in Figure 2).

In some implementations, the neural network 310 includes a long short-term memory (LSTM) recurrent neural network (RNN). In various implementations, the neural network 310 generates the objectives 254 based on a function of the possible objectives 360. For example, in some implementations, the neural network 310 generates the objectives 254 by selecting a portion of the possible objectives 360. In some implementations, the neural network 310 generates the objectives 254 such that the objectives 254 are within a degree of similarity to the possible objectives 360.

In various implementations, the neural network 310 generates the objectives 254 based on the contextual information 258 characterizing the synthesized reality setting. As illustrated in Figure 3A, in some implementations, the contextual information 258 indicates instantiated equipment representations 340, instantiated character representations 342, user-specified scene/environment information 344, and/or actions 210 from objective-effectuator engines.

In some implementations, the neural network 310 generates the objectives 254 based on the instantiated equipment representations 340. In some implementations, the instantiated equipment representations 340 refer to equipment representations that are located in the synthesized reality setting. For example, referring to Figure 1A, the instantiated equipment representations 340 include the robot representation 108c and the drone representation 108d in the synthesized reality setting 106. In some implementations, the objectives 254 include interacting with one or more of the instantiated equipment representations 340. For example, referring to Figure 1A, in some implementations, one of the objectives 254a for the boy action figure representation 108a includes destroying the robot representation 108c, and one of the objectives 254b for the girl action figure representation 108b includes protecting the robot representation 108c.

In some implementations, the neural network 310 generates the objectives 254 for each character representation based on the instantiated equipment representations 340. For example, referring to Figure 1A, if the synthesized reality setting 106 includes the robot representation 108c, then one of the objectives 254a for the boy action figure representation 108a includes destroying the robot representation 108c. However, if the synthesized reality setting 106 does not include the robot representation 108c, then the objective 254a for the boy action figure representation 108a includes maintaining peace within the synthesized reality setting 106.

In some implementations, the neural network 310 generates objectives 254 for each equipment representation based on the other equipment representations that are instantiated in the synthesized reality setting. For example, referring to Figure 1A, if the synthesized reality setting 106 includes the robot representation 108c, then one of the objectives 254d for the drone representation 108d includes protecting the robot representation 108c. However, if the synthesized reality setting 106 does not include the robot representation 108c, then the objective 254d for the drone representation 108d includes hovering at the center of the synthesized reality setting 106.

In some implementations, the neural network 310 generates the objectives 254 based on the instantiated character representations 342. In some implementations, the instantiated character representations 342 refer to character representations that are located in the synthesized reality setting. For example, referring to Figure 1A, the instantiated character representations 342 include the boy action figure representation 108a and the girl action figure representation 108b in the synthesized reality setting 106. In some implementations, the objectives 254 include interacting with one or more of the instantiated character representations 342. For example, referring to Figure 1A, in some implementations, one of the objectives 254d for the drone representation 108d includes following the girl action figure representation 108b. Similarly, in some implementations, one of the objectives 254c for the robot representation 108c include avoiding the boy action figure representation 108a.

In some implementations, the neural network 310 generates the objectives 254 for each character representation based on the other character representations that are instantiated in the synthesized reality setting. For example, referring to Figure 1A, if the synthesized reality setting 106 includes the boy action figure representation 108a, then one of the objectives 254b for the girl action figure representation 108b includes catching the boy action figure representation 108a. However, if the synthesized reality setting 106 does not include the boy action figure representation 108a, then the objective 254b for the girl action figure representation 108b includes flying within the synthesized reality setting 106.

In some implementations, the neural network 310 generates objectives 254 for each equipment representation based on the character representations that are instantiated in the synthesized reality setting. For example, referring to Figure 1A, if the synthesized reality setting 106 includes the girl action figure representation 108b, then one of the objectives 254d for the drone representation 108d includes following the girl action figure representation 108b. However, if the synthesized reality setting 106 does not include the girl action figure representation 108b, then the objective 254d for the drone representation 108d includes hovering at the center of the synthesized reality setting 106.

In some implementations, the neural network 310 generates the objectives 254 based on the user-specified scene/environment information 344. In some implementations, the user specified scene/environment information 344 indicates boundaries of the synthesized reality setting. In such implementations, the neural network 310 generates the objectives 254 such that the objectives 254 can be satisfied (e.g., achieved) within the boundaries of the synthesized reality setting. In some implementations, the neural network 310 generates the objectives 254 by selecting a portion of the possible objectives 252 that are better suited for the environment indicated by the user-specified scene/environment information 344. For example, the neural network 310 sets one of the objectives 254d for the drone representation 108d to hover over the boy action figure representation 108a when the user-specified scene/environment information 344 indicates that the skies within the synthesized reality setting are clear. In some implementations, the neural network 310 forgoes selecting a portion of the possible objectives 252 that are not suitable for the environment indicated by the user-specified scene/environment information 344. For example, the neural network 310 forgoes the hovering objective for the drone representation 108d when the user-specified scene/environment information 344 indicates high winds within the synthesized reality setting.

In some implementations, the neural network 310 generates the objectives 254 based on the actions 210 provided by various objective-effectuator engines. In some implementations, the neural network 310 generates the objectives 254 such that the objectives 254 can be satisfied (e.g., achieved) given the actions 210 provided by the objective-effectuator engines. In some implementations, the neural network 310 evaluates the possible objectives 360 with respect to the actions 210. In such implementations, the neural network 310 generates the objectives 360 by selecting the possible objectives 360 that can be satisfied by the actions 210 and forgoes selecting the possible objectives 360 that cannot be satisfied by the actions 210.

In various implementations, the training module 330 trains the neural network 310. In some implementations, the training module 330 provides neural network (NN) parameters 312 to the neural network 310. In some implementations, the neural network 310 includes model(s) of neurons, and the neural network parameters 312 represent weights for the model(s). In some implementations, the training module 330 generates (e.g., initializes or initiates) the neural network parameters 312, and refines (e.g., adjusts) the neural network parameters 312 based on the objectives 254 generated by the neural network 310.

In some implementations, the training module 330 includes a reward function 332 that utilizes reinforcement learning to train the neural network 310. In some implementations, the reward function 332 assigns a positive reward to objectives 254 that are desirable, and a negative reward to objectives 254 that are undesirable. In some implementations, during a training phase, the training module 330 compares the objectives 254 with verification data that includes verified objectives. In such implementations, if the objectives 254 are within a degree of similarity to the verified objectives, then the training module 330 stops training the neural network 310. However, if the objectives 254 are not within the degree of similarity to the verified objectives, then the training module 330 continues to train the neural network 310. In various implementations, the training module 330 updates the neural network parameters 312 during/after the training.

In various implementations, the scraper 350 scrapes content 352 to identify the possible objectives 360. In some implementations, the content 352 includes movies, video games, comics, novels, and fan-created content such as blogs and commentary. In some implementations, the scraper 350 utilizes various methods, systems and/or, devices associated with content scraping to scrape the content 352. For example, in some implementations, the scraper 350 utilizes one or more of text pattern matching, HTML (Hyper Text Markup Language) parsing, DOM (Document Object Model) parsing, image processing and audio analysis to scrape the content 352 and identify the possible objectives 360.

In some implementations, an objective-effectuator is associated with a type of representation 362, and the neural network 310 generates the objectives 254 based on the type of representation 362 associated with the objective-effectuator. In some implementations, the type of representation 362 indicates physical characteristics of the objective-effectuator (e.g., color, material type, texture, etc.). In such implementations, the neural network 310 generates the objectives 254 based on the physical characteristics of the objective-effectuator. In some implementations, the type of representation 362 indicates behavioral characteristics of the objective-effectuator (e.g., aggressiveness, friendliness, etc.). In such implementations, the neural network 310 generates the objectives 254 based on the behavioral characteristics of the objective-effectuator. For example, the neural network 310 generates an objective of being destructive for the boy action figure representation 108a in response to the behavioral characteristics including aggressiveness. In some implementations, the type of representation 362 indicates functional and/or performance characteristics of the objective-effectuator (e.g., strength, speed, flexibility, etc.). In such implementations, the neural network 310 generates the objectives 254 based on the functional characteristics of the objective-effectuator. For example, the neural network 310 generates an objective of always moving for the girl action figure representation 108b in response to the behavioral characteristics including speed. In some implementations, the type of representation 362 is determined based on a user input. In some implementations, the type of representation 362 is determined based on a combination of rules.

In some implementations, the neural network 310 generates the objectives 254 based on specified objectives 364. In some implementations, the specified objectives 364 are provided by an entity that controls (e.g., owns or created) the fictional material from where the character/equipment originated. For example, in some implementations, the specified objectives 364 are provided by a movie producer, a video game creator, a novelist, etc. In some implementations, the possible objectives 360 include the specified objectives 364. As such, in some implementations, the neural network 310 generates the objectives 254 by selecting a portion of the specified objectives 364.

In some implementations, the possible objectives 360 for an objective-effectuator are limited by a limiter 370. In some implementations, the limiter 370 restricts the neural network 310 from selecting a portion of the possible objectives 360. In some implementations, the limiter 370 is controlled by the entity that owns (e.g., controls) the fictional material from where the character/equipment originated. For example, in some implementations, the limiter 370 is controlled by a movie producer, a video game creator, a novelist, etc. In some implementations, the limiter 370 and the neural network 310 are controlled/operated by different entities. In some implementations, the limiter 370 restricts the neural network 310 from generating objectives that breach a criterion defined by the entity that controls the fictional material.

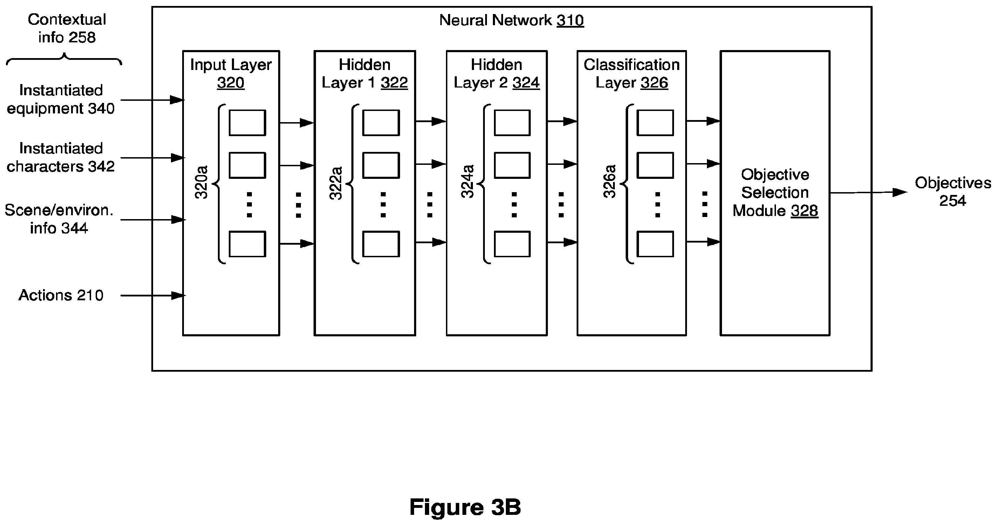

Figure 3B is a block diagram of the neural network 310 in accordance with some implementations. In the example of Figure 3B, the neural network 310 includes an input layer 320, a first hidden layer 322, a second hidden layer 324, a classification layer 326, and an objective selection module 328. While the neural network 310 includes two hidden layers as an example, those of ordinary skill in the art will appreciate from the present disclosure that one or more additional hidden layers are also present in various implementations. Adding additional hidden layers adds to the computational complexity and memory demands, but may improve performance for some applications.

In various implementations, the input layer 320 receives various inputs. In some implementations, the input layer 320 receives the contextual information 258 as input. In the example of Figure 3B, the input layer 320 receives inputs indicating the instantiated equipment 340, the instantiated characters 342, the user-specified scene/environment information 344, and the actions 210 from the objective-effectuator engines. In some implementations, the neural network 310 includes a feature extraction module (not shown) that generates a feature stream (e.g., a feature vector) based on the instantiated equipment 340, the instantiated characters 342, the user-specified scene/environment information 344, and/or the actions 210. In such implementations, the feature extraction module provides the feature stream to the input layer 320. As such, in some implementations, the input layer 320 receives a feature stream that is a function of the instantiated equipment 340, the instantiated characters 342, the user-specified scene/environment information 344, and the actions 210. In various implementations, the input layer 320 includes a number of LSTM logic units 320a, which are also referred to as neurons or models of neurons by those of ordinary skill in the art. In some such implementations, an input matrix from the features to the LSTM logic units 320a includes rectangular matrices. The size of this matrix is a function of the number of features included in the feature stream.

In some implementations, the first hidden layer 322 includes a number of LSTM logic units 322a. In some implementations, the number of LSTM logic units 322a ranges between approximately 10-500. Those of ordinary skill in the art will appreciate that, in such implementations, the number of LSTM logic units per layer is orders of magnitude smaller than previously known approaches (being of the order of O(10¹)-O(10²)), which allows such implementations to be embedded in highly resource-constrained devices. As illustrated in the example of Figure 3B, the first hidden layer 322 receives its inputs from the input layer 320.

In some implementations, the second hidden layer 324 includes a number of LSTM logic units 324a. In some implementations, the number of LSTM logic units 324a is the same as or similar to the number of LSTM logic units 320a in the input layer 320 or the number of LSTM logic units 322a in the first hidden layer 322. As illustrated in the example of Figure 3B, the second hidden layer 324 receives its inputs from the first hidden layer 322. Additionally or alternatively, in some implementations, the second hidden layer 324 receives its inputs from the input layer 320.

In some implementations, the classification layer 326 includes a number of LSTM logic units 326a. In some implementations, the number of LSTM logic units 326a is the same as or similar to the number of LSTM logic units 320a in the input layer 320, the number of LSTM logic units 322a in the first hidden layer 322 or the number of LSTM logic units 324a in the second hidden layer 324. In some implementations, the classification layer 326 includes an implementation of a multinomial logistic function (e.g., a soft-max function) that produces a number of outputs that is approximately equal to the number of possible actions 360. In some implementations, each output includes a probability or a confidence measure of the corresponding objective being satisfied by the actions 210. In some implementations, the outputs do not include objectives that have been excluded by operation of the limiter 370.

In some implementations, the objective selection module 328 generates the objectives 254 by selecting the top N objective candidates provided by the classification layer 326. In some implementations, the top N objective candidates are likely to be satisfied by the actions 210. In some implementations, the objective selection module 328 provides the objectives 254 to a rendering and display pipeline (e.g., the display engine 260 shown in Figure 2). In some implementations, the objective selection module 328 provides the objectives 254 to one or more objective-effectuator engines (e.g., the boy action figure character engine 208a, the girl action figure character engine 208b, the robot equipment engine 208c, the drone equipment engine 208d, and/or the environmental engine 208e shown in Figure 2).

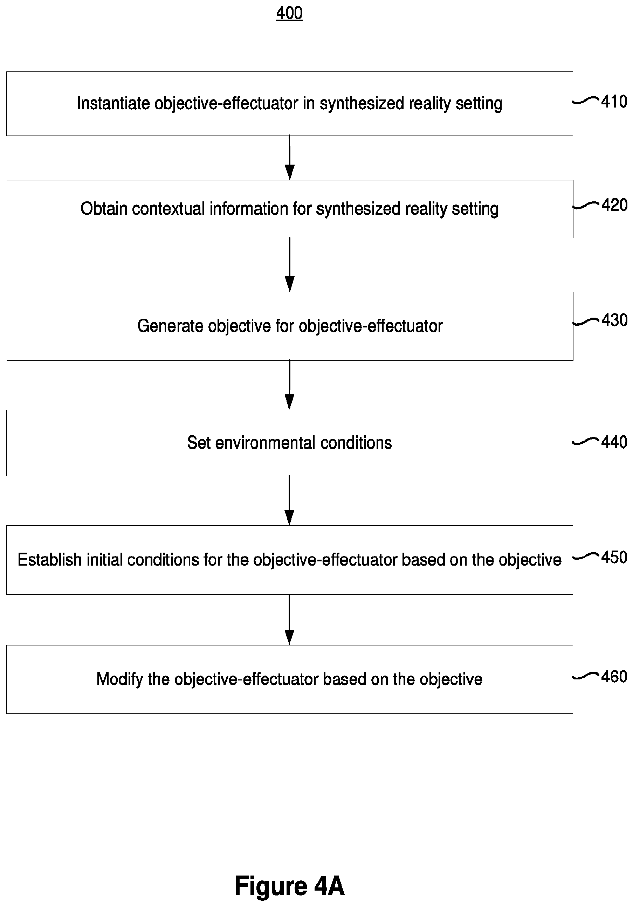

Figure 4A is a flowchart representation of a method 400 of generating content for synthesized reality settings. The method 400 is performed by a device with a non-transitory memory and one or more processors coupled with the non- transitory memory (e.g., the controller 102 and/or the electronic device 103 shown in Figure 1A). In some implementations, the method 400 is performed by processing logic, including hardware, firmware, software, or a combination thereof. The method 400 is performed by a processor executing code stored in a (e.g., non-transitory computer-readable) medium (e.g., a memory). Briefly, the method 400 includes instantiating an objective-effectuator into a synthesized reality setting, obtaining contextual information for the synthesized reality setting, generating an objective for the objective- effectuator, setting environmental conditions for the synthesized reality setting, establishing initial conditions for the objective-effectuator based on the objective, and modifying the objective-effectuator based on the objective.

As represented by block 410, the method 400 includes instantiating an objective-effectuator into a synthesized reality setting (e.g., instantiating the boy action figure representation 108a, the girl action figure representation 108b, the robot representation 108c, and/or the drone representation 108d into the synthesized reality setting 106 shown in Figure 1A). The objective-effectuator is characterized by a set of predefined objectives (e.g., the possible objectives 360 shown in Figure 3A) and a set of visual rendering attributes.

As represented by block 420, the method 400 includes obtaining contextual information characterizing the synthesized reality setting (e.g., the contextual information 258 shown in Figures 2-3B). In some implementations, the method 400 includes receiving the contextual information (e.g., from a user).

As represented by block 430, the method 400 includes generating an objective for the objective-effectuator based on a function of the set of predefined objectives, the contextual information, and a set of predefined actions for the objective-effectuator. For example, referring to Figure 2, the method 400 includes generating the objectives 254 based on the possible objectives 252, the contextual information 258, and the actions 210.

As represented by block 440, the method 400 includes setting environmental conditions for the synthesized reality setting based on the objective for the objective-effectuator. For example, referring to Figure 2, the method 400 includes generating the environmental objectives 254e (e.g., the environmental conditions).

As represented by block 450, the method 400 includes establishing initial conditions and a current set of actions for the objective-effectuator based on the objective for the objective-effectuator. For example, referring to Figure 2, the method 400 includes establishing the initial/end states 256 for various objective-effectuators (e.g., character representations, equipment representations and/or the environment).

As represented by block 460, the method 400 includes modifying the objective-effectuator based on the objective. For example, referring to Figure 2, in some implementations, the method 400 includes providing the objectives 254 to the display engine 260 and/or to one or more objective-effectuator engines.

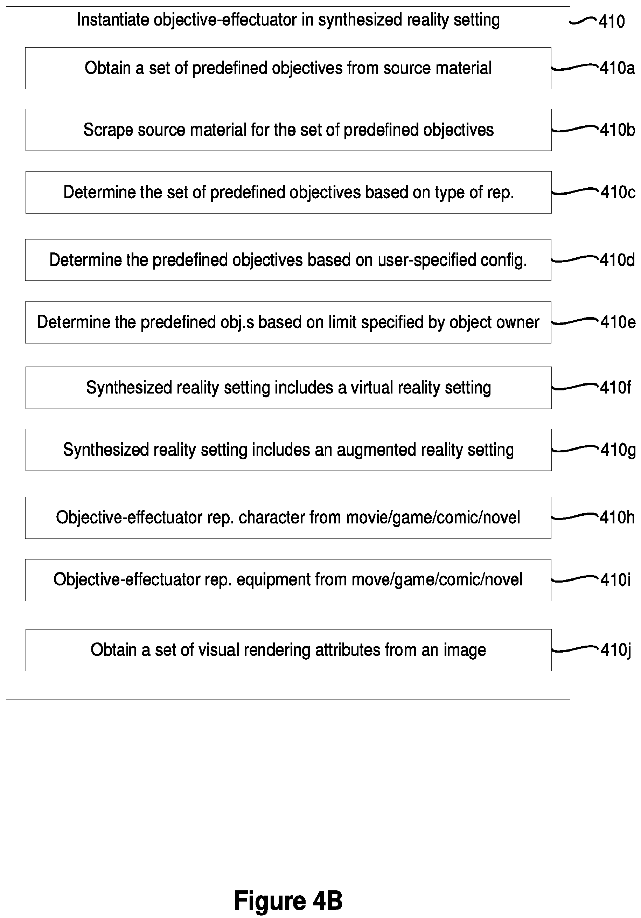

Referring to Figure 4B, as represented by block 410a, in various implementations, the method 400 includes obtaining a set of predefined objectives (e.g., the possible objectives 360 shown in Figure 3A) from source material (e.g., the content 352 shown in Figure 3A, for example, movies, books, video games, comics, and/or novels). As represented by block 410b, in various implementations, the method 400 includes scraping the source material for the set of predefined objectives.

As represented by block 410c, in some implementations, the method 400 includes determining the set of predefined objectives based on a type of representation (e.g., the type of representation 362 shown in Figure 3A). As represented by block 410d, in some implementations, the method 400 includes determining the set of predefined objectives based on user-specified configuration (e.g., the type of representation 362 shown in Figure 3A is determined based on a user input).

As represented by block 410e, in some implementations, the method 400 includes determining the predefined objectives based on a limit specified by an object owner. For example, referring to Figure 3A, in some implementations, the method 400 includes limiting the possible objectives 360 selectable by the neural network 310 by operation of the limiter 370.

As represented by block 410f, in some implementations, the synthesized reality setting (e.g., the synthesized reality setting 106 shown in Figure 1A) includes a virtual reality setting.

As represented by block 410g, in some implementations, the synthesized reality setting (e.g., the synthesized reality setting 106 shown in Figure 1A) includes an augmented reality setting.

As represented by block 410h, in some implementations, the objective- effectuator is a representation of a character (e.g., the boy action figure representation 108a and/or the girl action figure representation 108b shown in Figure 1A) from one or more of a movie, a video game, a comic and a novel.

As represented by block 410i, in some implementations, the objective-effectuator is a representation of an equipment (e.g., the robot representation 108c and/or the drone representation 108d shown in Figure 1A) from one or more of a movie, a video game, a comic and a novel.

As represented by block 410j, in some implementations, the method 400 includes obtaining a set of visual rendering attributes from an image. For example, in some implementations, the method 400 includes capturing an image and extracting the visual rendering attributes from the image (e.g., by utilizing devices, methods, and/or systems associated with image processing).

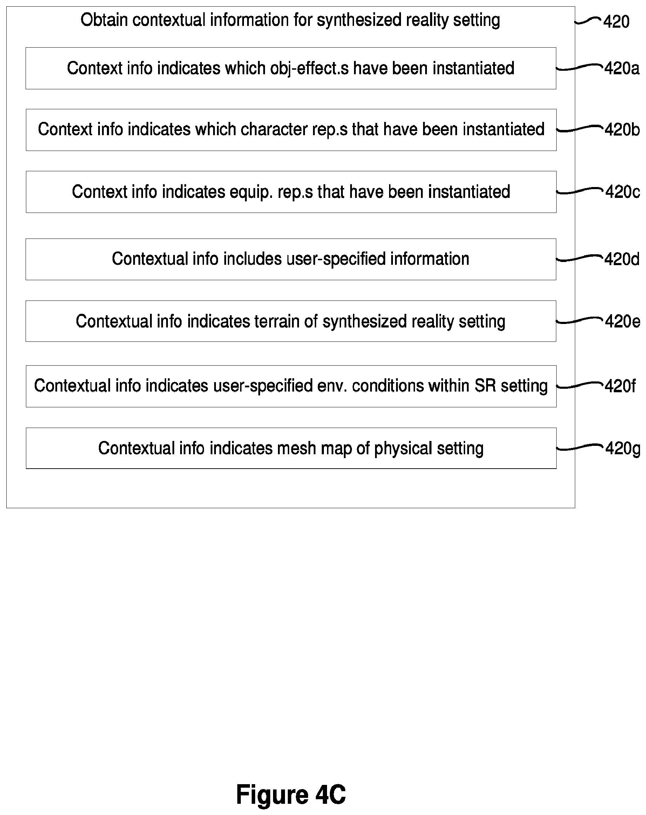

Referring to Figure 4C, as represented by block 420a, in various implementations, the contextual information indicates whether objective-effectuators have been instantiated in the synthesized reality setting. As represented by block 420b, in some implementations, the contextual information indicates which character representations have been instantiated in the synthesized reality setting (e.g., the contextual information includes the instantiated characters representation 342 shown in Figures 3A-3B). As represented by block 420c, in some implementations, the contextual information indicates equipment representations that have been instantiated in the synthesized reality setting (e.g., the contextual information includes the instantiated equipment representations 340 shown in Figures 3A-3B).

As represented by block 420d, in various implementations, the contextual information includes user-specified scene information (e.g., user-specified scene/environment information 344 shown in Figures 3A-3B). As represented by block 420e, in various implementations, the contextual information indicates a terrain (e.g., a landscape, for example, natural artifacts such as mountains, rivers, etc.) of the synthesized reality setting. As represented by block 420f, in various implementations, the contextual information indicates environmental conditions within the synthesized reality setting (e.g., the user-specified scene/environmental information 344 shown in Figures 3A-3B).

As represented by block 420g, in some implementations, the contextual information includes a mesh map of a physical setting (e.g., a detailed representation of the physical setting where the device is located). In some implementations, the mesh map indicates positions and/or dimensions of real objects that are located in the physical setting. The contextual information includes data corresponding to a physical setting. The contextual information includes data corresponding to a physical setting in which the device is located. In some implementations, the contextual information indicates a bounding surface of the physical setting (e.g., a floor, walls, and/or a ceiling). Data corresponding to the physical setting is utilized to synthesize/modify a SR setting. For example, the SR setting includes SR representations of walls that exist in the physical setting.

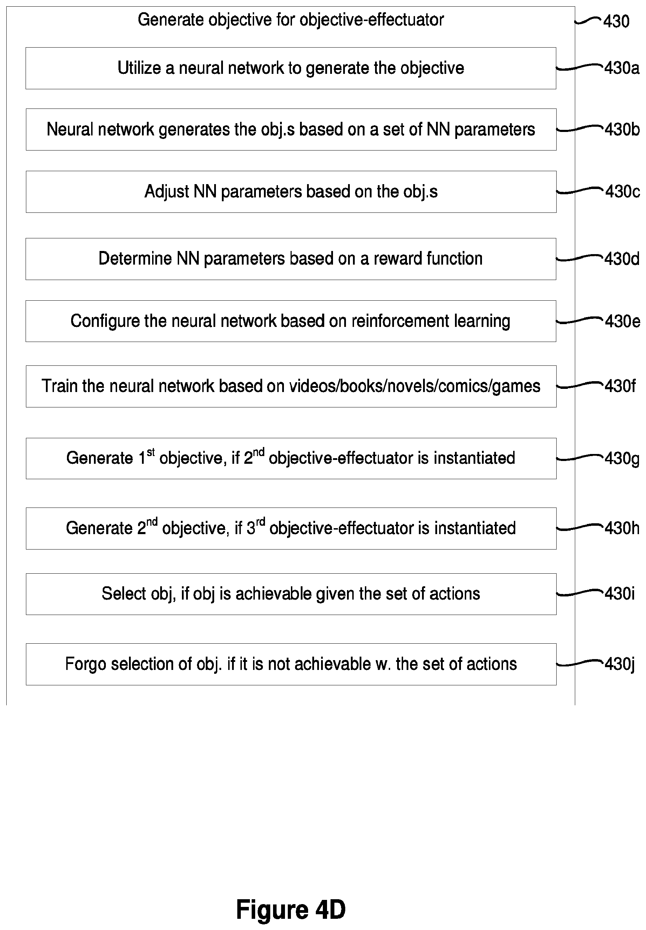

Referring to Figure 4D, as represented by block 430a, in some implementations, the method 400 includes utilizing a neural network (e.g., the neural network 310 shown in Figures 3A-3B) to generate the objectives. As represented by block 430b, in some implementations, the neural network generates the objectives based on a set of neural network parameters (e.g., the neural network parameters 312 shown in Figure 3A). As represented by block 430c, in some implementations, the method 400 includes adjusting the neural network parameters based on the objectives generated by the neural network (e.g., adjusting the neural network parameters 312 based on the objectives 254 shown in Figure 3A).

As represented by block 430d, in some implementations, the method 400 includes determining neural network parameters based on a reward function (e.g., the reward function 332 shown in Figure 3A) that assigns a positive reward to desirable objectives and a negative reward to undesirable objectives. As represented by block 430e, in some implementations, the method 400 includes configuring (e.g., training) the neural network based on reinforcement learning. As represented by block 430f, in some implementations, the method 400 includes training the neural network based on content scraped (e.g., by the scraper 350 shown in Figure 3A) from videos such as movies, books such as novels and comics, and video games.

As represented by block 430g, in some implementations, the method 400 includes generating a first objective if a second objective-effectuator is instantiated in the synthesized reality setting. As represented by block 430h, in some implementations, the method 400 includes generating a second objective if a third objective-effectuator is instantiated in the synthesized reality setting. More generally, in various implementations, the method 400 includes generating different objectives for an objective-effectuator based on the other objective-effectuators that are present in the synthesized reality setting.

As represented by block 430i, in some implementations, the method 400 includes selecting an objective if, given a set of actions, the likelihood of the objective being satisfied is greater than a threshold. As represented by block 430j, in some implementations, the method 400 includes forgoing selecting an objective if, given the set of actions, the likelihood of the objective being satisfied is less than the threshold.

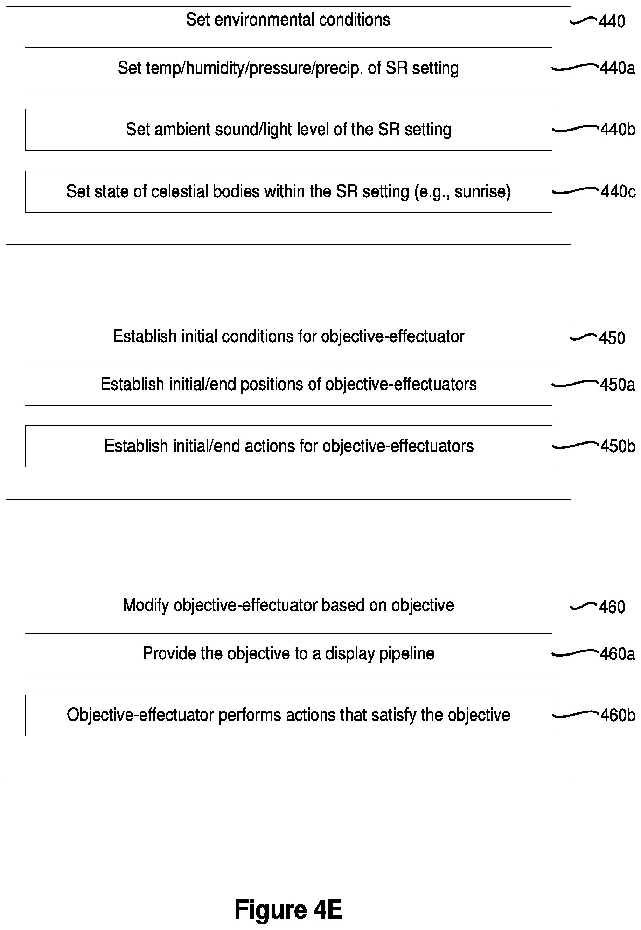

Referring to Figure 4E, as represented by block 440a, in some implementations, the method 400 includes setting one or more of a temperature value, a humidity value, a pressure value and a precipitation value within the synthesized reality setting. In some implementations, the method 400 includes making it rain or snow in the synthesized reality setting. As represented by block 440b, in some implementations, the method 400 includes setting one or more of an ambient sound level value (e.g., in decibels) and an ambient lighting level value (e.g., in lumens) for the synthesized reality setting. As represented by block 440c, in some implementations, the method 400 includes setting states of celestial bodies within the synthesized reality setting (e.g., setting a sunrise or a sunset, setting a full moon or a partial moon, etc.).

As represented by block 450a, in some implementations, the method 400 includes establishing initial/end positions of objective-effectuators. In some implementations, the synthesized reality setting is associated with a time duration. In such implementations, the method 400 includes setting initial positions that the objective-effectuators occupy at or near the beginning of the time duration, and/or setting end positions that the objective-effectuators occupy at or near the end of the time duration.

As represented by block 450b, in some implementations, the method 400 includes establishing initial/end actions for objective-effectuators. In some implementations, the synthesized reality setting is associated with a time duration. In such implementations, the method 400 includes establishing initial actions that the objective-effectuators perform at or near the beginning of the time duration, and/or establishing end actions that the objective- effectuators perform at or near the end of the time duration.

As represented by block 460a, in some implementations, the method 400 includes providing the objectives to a rendering and display pipeline (e.g., the display engine 260 shown in Figure 2). As represented by block 460b, in some implementations, the method 400 includes modifying a SR representation of the objective-effectuator such that the SR representation of the objective-effectuator can be seen as performing actions that satisfy the objectives.

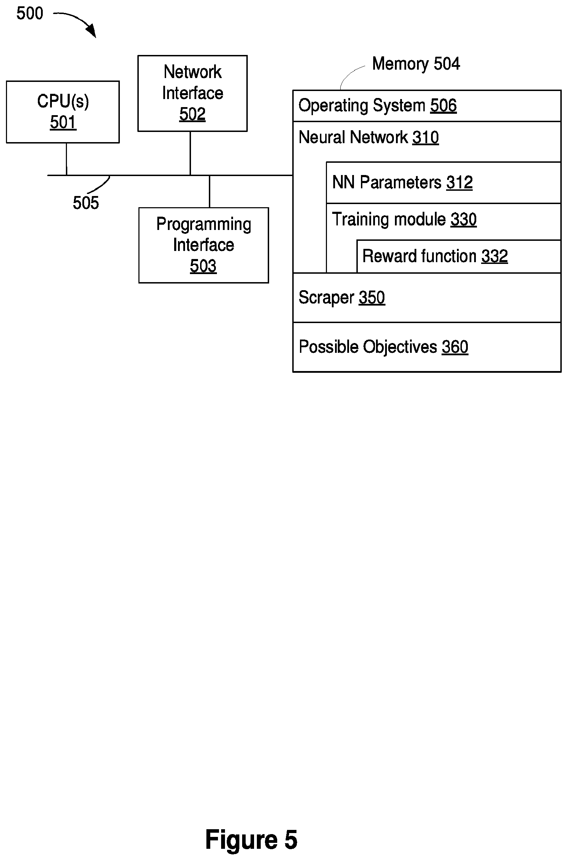

Figure 5 is a block diagram of a server system 500 enabled with one or more components of a device (e.g., the controller 102 and/or the electronic device 103 shown in Figure 1A) in accordance with some implementations. While certain specific features are illustrated, those of ordinary skill in the art will appreciate from the present disclosure that various other features have not been illustrated for the sake of brevity, and so as not to obscure more pertinent aspects of the implementations disclosed herein. To that end, as a non-limiting example, in some implementations the server system 500 includes one or more processing units (CPUs) 501, a network interface 502, a programming interface 503, a memory 504, and one or more communication buses 505 for interconnecting these and various other components.

In some implementations, the network interface 502 is provided to, among other uses, establish and maintain a metadata tunnel between a cloud hosted network management system and at least one private network including one or more compliant devices. In some implementations, the communication buses 505 include circuitry that interconnects and controls communications between system components. The memory 504 includes high-speed random access memory, such as DRAM, SRAM, DDR RAM or other random access solid state memory devices, and may include non-volatile memory, such as one or more magnetic disk storage devices, optical disk storage devices, flash memory devices, or other non-volatile solid state storage devices. The memory 504 optionally includes one or more storage devices remotely located from the CPU(s) 501. The memory 504 comprises a non-transitory computer readable storage medium.

In some implementations, the memory 504 or the non-transitory computer readable storage medium of the memory 504 stores the following programs, modules and data structures, or a subset thereof including an optional operating system 506, the neural network 310, the training module 330, the scraper 350, and the possible objectives 360. As described herein, the neural network 310 is associated with the neural network parameters 312. As described herein, the training module 330 includes a reward function 332 that trains (e.g., configures) the neural network 310 (e.g., by determining the neural network parameters 312). As described herein, the neural network 310 determines objectives (e.g., the objectives 254 shown in Figures 2-3B) for objective-effectuators in a synthesized reality setting and/or for the environment of the synthesized reality setting.

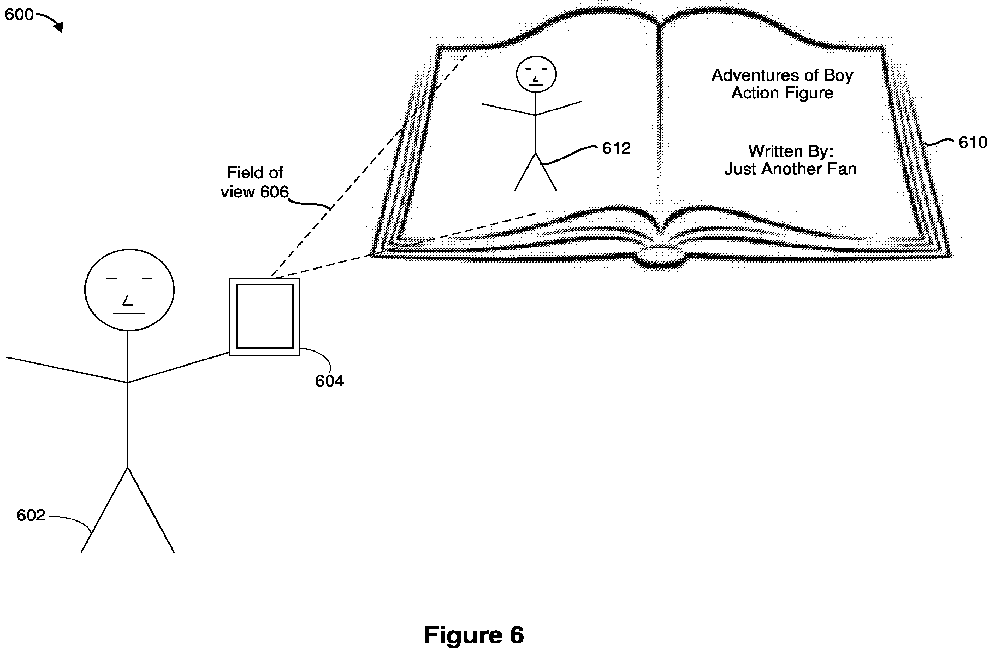

Figure 6 is a diagram that illustrates an environment 600 in which a character is being captured. To that end, the environment 600 includes a hand 602 holding a device 604, and fictional material 610. In the example of Figure 6, the fictional material 610 includes a book, a novel, or a comic that is about the boy action figure. The fictional material 610 includes a picture 612 of the boy action figure. In operation, the user holds the device 604 such that the picture 612 is within a field of view 606 of the device 604. In some implementations, the device 604 captures an image that includes the picture 612 of the boy action figure.

In some implementations, the picture 612 includes encoded data (e.g., a barcode) that identifies the boy action figure. For example, in some implementations, the encoded data specifies that the picture 612 is of the boy action figure from the fictional material 610. In some implementations, the encoded data includes a uniform resource locator (URL) that directs the device 604 to a resource that includes information regarding the boy action figure. For example, in some implementations, the resource includes various physical and/or behavioral attributes of the boy action figures. In some implementations, the resource indicates objectives for the boy action figure.

In various implementations, the device 604 presents a SR representation of an objective-effectuator of the boy action figure in a synthesized reality setting (e.g., in the synthesized reality setting 106 shown in Figure 1A). Figure 6 illustrates a non-limiting example of capturing a character. In some implementations, the device 604 captures characters and/or equipment based on audio input. For example, in some implementations, the device 604 receives an audio input that identifies the boy action figure. In such implementations, the device 604 queries a datastore of characters and equipment to identify the character/equipment specified by the audio input.

The invention is defined by the appended set of claims. It should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

As used in the description of the embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
at a device including a non-transitory memory and one or more processors coupled with the non-transitory memory:
instantiating an objective-effectuator into a synthesized reality setting (410), wherein the objective-effectuator is **characterized by** a set of predefined objectives and a set of visual rendering attributes;
obtaining contextual information characterizing the synthesized reality setting (420), the contextual information including data corresponding to a physical setting where the device is located, wherein the data corresponding to the physical setting includes a mesh map of the physical setting that indicates positions and/or dimensions of real objects that are located in the physical setting;
modifying the synthesized reality setting based on the data corresponding to the physical setting where the device is located, wherein the synthesized reality setting is modified to include synthesized reality representations of the real objects that are located in the physical setting where the device is located;
generating an objective for the objective-effectuator (430) based on a function of the set of predefined objectives, the contextual information including the positions and/or dimensions of the real objects that are located in the physical setting where the device is located and a set of predefined actions for the objective-effectuator;
setting environmental conditions (440) for the synthesized reality setting based on the objective for the objective-effectuator;
establishing initial conditions (450) and a current set of actions for the objective-effectuator based on the objective for the objective-effectuator; and
manipulating the objective-effectuator based on the objective (460).

2. The method of claim 1, wherein generating the objective comprises utilizing a neural network to generate the objective.

3. The method of claim 2, wherein the neural network generates the objective based on a set of neural network parameters.

4. The method of claim 3, further comprising:
adjusting the set of neural network parameters based on the objective.

5. The method of claim 3 or 4, further comprising:
determining the set of neural network parameters based on a reward function that assigns positive rewards to desirable objectives and negative rewards to undesirable objectives.

6. The method of any of claims 2 to 5, further comprising:
configuring the neural network based on reinforcement learning.

7. The method of any of claims 2 to 6, further comprising:
training the neural network based on one or more of videos, novels, books, comics and video games associated with the objective-effectuator.

8. The method of any preceding claim, wherein manipulating the objective-effectuator comprises:
providing the objective to an objective-effectuator engine that generates actions which satisfy the objective.

9. The method of any preceding claim, further comprising:
obtaining the set of predefined objectives from source material including one or more of movies, video games, comics and novels.

10. The method of claim 9, wherein obtaining the set of predefined objectives comprises:
scraping the source material to extract the set of predefined objectives.

11. The method of claim 9, wherein obtaining the set of predefined objectives comprises:
determining the set of predefined objectives based on a type of the objective-effectuator that is instantiated.

12. The method of claim 9, wherein obtaining the set of predefined objectives comprises:
determining the set of predefined objectives based on a user-specified configuration of the objective-effectuator.

13. The method of claim 9, wherein obtaining the set of predefined objectives comprises:
determining the set of predefined objectives based on limits specified by an entity that owns an object.

14. A device comprising:
one or more processors;
a non-transitory memory;
one or more displays; and
one or more programs stored in the non-transitory memory, which, when executed by the one or more processors, cause the device to:
instantiate an objective-effectuator into a synthesized reality setting (410), wherein the objective-effectuator is **characterized by** a set of predefined objectives and a set of visual rendering attributes;
obtain contextual information characterizing the synthesized reality setting (420), the contextual information including data corresponding to a physical setting where the device is located, wherein the data corresponding to the physical setting includes a mesh map of the physical setting that indicates positions and/or dimensions of real objects that are located in the physical setting;
modify the synthesized reality setting based on the data corresponding to the physical setting where the device is located, wherein the synthesized reality setting is modified to include synthesized reality representations of the real objects that are located in the physical setting where the device is located;
generate an objective for the objective-effectuator (430) based on a function of the set of predefined objectives, the contextual information including the positions and/or the dimensions of the real objects that are located in the physical setting where the device is located and a set of predefined actions for the objective-effectuator;
set environmental conditions (440) for the synthesized reality setting based on the objective for the objective-effectuator;
establish initial conditions (450) and a current set of actions for the objective-effectuator based on the objective for the objective-effectuator; and
manipulate the objective-effectuator based on the objective (460).

15. A medium or memory comprising one or more programs, which, when executed by one or more processors of a device with a display, cause the device to:
instantiate an objective-effectuator into a synthesized reality setting (410), wherein the objective-effectuator is **characterized by** a set of predefined objectives and a set of visual rendering attributes;
obtain contextual information characterizing the synthesized reality setting (420), the contextual information including data corresponding to a physical setting where the device is located, wherein the data corresponding to the physical setting includes a mesh map of the physical setting that indicates positions and/or dimensions of real objects that are located in the physical setting;
modify the synthesized reality setting based on the data corresponding to the physical setting where the device is located, wherein the synthesized reality setting is modified to include synthesized reality representations of the real objects that are located in the physical setting where the device is located;
generate an objective for the objective-effectuator (430) based on a function of the set of predefined objectives, the contextual information including the positions and/or dimensions of the real objects that are located in the physical setting where the device is located and a set of predefined actions for the objective-effectuator;
set environmental conditions (440) for the synthesized reality setting based on the objective for the objective-effectuator;
establish initial conditions (450) and a current set of actions for the objective-effectuator based on the objective for the objective-effectuator; and
manipulate the objective-effectuator based on the objective (460).

## Patentansprüche

1. Ein Verfahren, umfassend:
an einer Vorrichtung, die einen nicht-flüchtigen Speicher und einen oder mehrere Prozessoren beinhaltet, die mit dem nicht-flüchtigen Speicher gekoppelt sind:
Instanziieren eines Ziel-Effektgebers in eine synthetisierte Realitätseinstellung (410), wobei der Ziel-Effektgeber durch einen Satz von vordefinierten Zielen und einen Satz von visuellen Wiedergabeattributen gekennzeichnet ist; Erhalten von Kontextinformation, die die synthetisierte Realitätseinstellung (420) kennzeichnet, wobei die Kontextinformation Daten beinhaltet, die einer physischen Einstellung entsprechen, in der sich die Vorrichtung befindet, wobei die Daten, die der physischen Einstellung entsprechen, eine Netzkarte der physischen Einstellung beinhalten, die Positionen und/oder Dimensionen von realen Objekten angibt, die sich in der physischen Einstellung befinden;
Modifizieren der synthetisierten Realitätseinstellung basierend auf den Daten, die der physischen Einstellung entsprechen, in der sich die Vorrichtung befindet, wobei die synthetisierte Realitätseinstellung modifiziert wird, um synthetisierte Realitätsdarstellungen der realen Objekte zu beinhalten, die sich in der physischen Einstellung befinden, in der sich die Vorrichtung befindet;
Erzeugen eines Ziels für den Ziel-Effektgeber (430) basierend auf einer Funktion des Satzes von vordefinierten Zielen, wobei die Kontextinformation die Positionen und/oder Dimensionen der realen Objekte beinhaltet, die sich in der physischen Einstellung befinden, in der sich die Vorrichtung befindet, und einen Satz von vordefinierten Aktionen für den Ziel-Effektgeber;
Einstellen von Umgebungsbedingungen (440) für die synthetisierte Realitätseinstellung basierend auf dem Ziel für den Ziel-Effektgeber;
Festlegen von Anfangsbedingungen (450) und eines aktuellen Satzes von Aktionen für den Ziel-Effektgeber basierend auf dem Ziel für den Ziel-Effektgeber; und
Manipulieren des Ziel-Effektgebers basierend auf dem Ziel (460).

2. Das Verfahren nach Anspruch 1, wobei das Erzeugen des Ziels das Verwenden eines neuronalen Netzwerks umfasst, um das Ziel zu erzeugen.

3. Das Verfahren nach Anspruch 2, wobei das neuronale Netzwerk das Ziel basierend auf einem Satz von neuronalen Netzwerkparametern erzeugt.

4. Das Verfahren nach Anspruch 3, ferner umfassend:
Anpassen des Satzes von neuronalen Netzwerkparametern basierend auf dem Ziel.

5. Das Verfahren nach Anspruch 3 oder 4, ferner umfassend:
Bestimmen des Satzes von neuronalen Netzwerkparametern basierend auf einer Belohnungsfunktion, die
wünschenswerten Zielen positive Belohnungen und unerwünschten Zielen negative Belohnungen zuweist.

6. Das Verfahren nach einem der Ansprüche 2 bis 5, ferner umfassend:
Konfigurieren des neuronalen Netzwerks basierend auf Reinforcement Learning.

7. Das Verfahren nach einem der Ansprüche 2 bis 6, ferner umfassend:
Trainieren des neuronalen Netzwerks basierend auf einem oder mehreren von Videos, Romanen, Büchern, Comics,
und Videospielen, die mit dem Ziel-Effektgeber assoziiert sind.

8. Das Verfahren nach einem der vorhergehenden Ansprüche, wobei das Manipulieren des Ziel-Effektgebers umfasst:
Bereitstellen des Ziels für eine Ziel-Effektgeber-Engine, die Aktionen erzeugt, die das Ziel erfüllen.

9. Das Verfahren nach einem der vorhergehenden Ansprüche, ferner umfassend:
Erhalten des Satzes von vordefinierten Zielen aus Ausgangsmaterial, einschließlich eines oder mehrerer
von Filmen, Videospielen, Comics und Romanen.

10. Das Verfahren nach Anspruch 9, wobei Erhalten des Satzes von vordefinierten Zielen umfasst: extrahieren (scraping) des Ausgangsmaterials, um den Satz von vordefinierten Zielen zu extrahieren.

11. Das Verfahren nach Anspruch 9, wobei Erhalten des Satzes von vordefinierten Zielen umfasst: Bestimmen des Satzes von vordefinierten Zielen basierend auf einem Typ des Ziel-Effektgebers, der instanziiert wird.

12. Das Verfahren nach Anspruch 9, wobei Erhalten des Satzes von vordefinierten Zielen umfasst: Bestimmen des Satzes von vordefinierten Zielen basierend auf einer benutzerspezifizierten Konfiguration des Ziel-Effektgebers.

13. Das Verfahren nach Anspruch 9, wobei Erhalten des Satzes von vordefinierten Zielen umfasst: Bestimmen des Satzes von vordefinierten Zielen basierend auf Grenzen, die durch eine Entität spezifiziert werden, die ein Objekt besitzt.

14. Eine Vorrichtung, umfassend:
einen oder mehrere Prozessoren;
einen nicht-flüchtigen Speicher;
eine oder mehrere Anzeigen; und
ein oder mehrere Programme, die in dem nicht-flüchtigen Speicher gespeichert sind, die, wenn sie von dem einen oder den mehreren Prozessoren ausgeführt werden, die Vorrichtung zu Folgendem veranlassen:
Instanziieren eines Ziel-Effektgebers in eine synthetisierte Realitätseinstellung (410), wobei der Ziel-Effektgeber durch einen Satz von vordefinierten Zielen und einen Satz von visuellen Wiedergabeattributen gekennzeichnet ist;
Erhalten von Kontextinformation, die die synthetisierte Realitätseinstellung (420) kennzeichnet, wobei die Kontextinformation Daten beinhaltet, die einer physischen Einstellung entsprechen, in der sich die Vorrichtung befindet, wobei die Daten, die der physischen Einstellung entsprechen, eine Netzkarte der physischen Einstellung beinhalten, die Positionen und/oder Dimensionen von realen Objekten angibt, die sich in der physischen Einstellung befinden;
Modifizieren der synthetisierten Realitätseinstellung basierend auf den Daten, die der physischen Einstellung entsprechen, in der sich die Vorrichtung befindet, wobei die synthetisierte Realitätseinstellung modifiziert wird, um synthetisierte Realitätsdarstellungen der realen Objekte zu beinhalten, die sich in der physischen Einstellung befinden, in der sich die Vorrichtung befindet;
Erzeugen eines Ziels für den Ziel-Effektgeber (430) basierend auf einer Funktion des Satzes von vordefinierten Zielen, wobei die Kontextinformation die Positionen und/oder die Dimensionen der realen Objekte beinhaltet, die sich in der physischen Einstellung befinden, in der sich die Vorrichtung befindet, und einen Satz von vordefinierten Aktionen für den Ziel-Effektgeber;
Einstellen von Umgebungsbedingungen (440) für die synthetisierte Realitätseinstellung basierend auf dem Ziel für den Ziel-Effektgeber;
Festlegen von Anfangsbedingungen (450) und eines aktuellen Satzes von Aktionen für den Ziel-Effektgeber basierend auf dem Ziel für den Ziel-Effektgeber; und
Manipulieren des Ziel-Effektgebers basierend auf dem Ziel (460).

15. Ein Medium oder Speicher, umfassend ein oder mehrere Programme, die, wenn sie von einem oder mehreren Prozessoren einer Vorrichtung mit einer Anzeige ausgeführt werden, die Vorrichtung zu Folgendem veranlassen:
Instanziieren eines Ziel-Effektgebers in eine synthetisierte Realitätseinstellung (410), wobei der Ziel-Effektgeber durch einen Satz von vordefinierten Zielen und einen Satz von visuellen Wiedergabeattributen gekennzeichnet ist;
Erhalten von Kontextinformation, die die synthetisierte Realitätseinstellung (420) kennzeichnet, wobei die Kontextinformation Daten beinhaltet, die einer physischen Einstellung entsprechen, in der sich die Vorrichtung befindet, wobei die Daten, die der physischen Einstellung entsprechen, eine Netzkarte der physischen Einstellung beinhalten, die Positionen und/oder Dimensionen von realen Objekten angibt, die sich in der physischen Einstellung befinden;
Modifizieren der synthetisierten Realitätseinstellung basierend auf den Daten, die der physischen Einstellung entsprechen, in der sich die Vorrichtung befindet, wobei die synthetisierte Realitätseinstellung modifiziert wird, um synthetisierte Realitätsdarstellungen der realen Objekte zu beinhalten, die sich in der physischen Einstellung befinden, in der sich die Vorrichtung befindet;
Erzeugen eines Ziels für den Ziel-Effektgeber (430) basierend auf einer Funktion des Satzes von vordefinierten Zielen, wobei die Kontextinformation die Positionen und/oder Dimensionen der realen Objekte beinhaltet, die sich in der physischen Einstellung befinden, in der sich die Vorrichtung befindet, und einen Satz von vordefinierten Aktionen für den Ziel-Effektgeber;
Einstellen von Umgebungsbedingungen (440) für die synthetisierte Realitätseinstellung basierend auf dem Ziel für den Ziel-Effektgeber;
Festlegen von Anfangsbedingungen (450) und eines aktuellen Satzes von Aktionen für den Ziel-Effektgeber basierend auf dem Ziel für den Ziel-Effektgeber; und Manipulieren des Ziel-Effektgebers basierend auf dem Ziel (460).

## Revendications

1. Un procédé comprenant :
sur un dispositif comprenant une mémoire non transitoire et un ou plusieurs processeurs couplés à la mémoire non transitoire :
l'instanciation d'un effecteur d'objectif en un décor en réalité de synthèse (410), l'effecteur d'objectif étant **caractérisé par** un ensemble d'objectifs prédéfinis et un ensemble d'attributs de restitution visuelle ;
l'obtention d'informations de contexte caractérisant le décor en réalité de synthèse (420), les informations de contexte comprenant des données correspondant à un décor physique où se trouve le dispositif, les données correspondant au décor physique comprenant une carte maillée du décor physique qui indique des positions et/ou des dimensions d'objets réels qui se trouvent dans le décor physique ;
la modification du décor en réalité de synthèse sur la base des données correspondant au décor physique où se trouve le dispositif, le décor en réalité de synthèse étant modifié pour inclure des représentations en réalité de synthèse des objets réels qui se trouvent dans le décor physique où se trouve le dispositif ;
la génération d'un objectif pour l'effecteur d'objectif (430) sur la base d'une fonction de l'ensemble d'objectifs prédéfinis, les informations de contexte incluant les positions et/ou les dimensions des objets réels qui se trouvent dans le décor physique où se trouve le dispositif, et d'un ensemble d'actions prédéfinies pour l'effecteur d'objectif ;
le paramétrage de conditions d'environnement (440) pour le décor en réalité de synthèse sur la base de l'objectif pour l'effecteur d'objectif ;
l'établissement de conditions initiales (450) et d'un ensemble courant d'actions pour l'effecteur d'objectif sur la base de l'objectif pour l'effecteur d'objectif ; et
la manipulation de l'effecteur d'objectif sur la base de l'objectif (460).

2. Le procédé de la revendication 1, dans lequel la génération de l'objectif comprend l'utilisation d'un réseau de neurones pour générer l'objectif.

3. Le procédé de la revendication 2, dans lequel le réseau de neurones génère l'objectif sur la base d'un ensemble de paramètres de réseau de neurones.

4. Le procédé de la revendication 3, comprenant en outre :
l'ajustement de l'ensemble de paramètres de réseau de neurones sur la base de l'objectif.

5. Le procédé de la revendication 3 ou 4, comprenant en outre :
la détermination de l'ensemble de paramètres de réseau de neurones sur la base d'une fonction de récompense qui attribue des récompenses positives à des objectifs souhaitables et des récompenses négatives à des objectifs indésirables.

6. Le procédé de l'une des revendications 2 à 5, comprenant en outre :
la configuration du réseau de neurones sur la base d'un apprentissage de renforcement.

7. Le procédé de l'une des revendications 2 à 6, comprenant en outre :
l'entraînement du réseau de neurones sur la base d'un ou plusieurs parmi des vidéos, des romans, des livres, des bandes dessinées et des jeux vidéo, associés à l'effecteur d'objectif.

8. Le procédé de l'une des revendications précédentes, dans lequel la manipulation de l'effecteur d'objectif comprend :
la délivrance de l'objectif à un moteur d'effecteur d'objectif, qui génère des actions qui vérifient l'objectif.

9. Le procédé de l'une des revendications précédentes, comprenant en outre :
l'obtention de l'ensemble d'objectifs prédéfinis à partir d'un matériau source comprenant un ou plusieurs parmi des films, des jeux vidéo, des bandes dessinées et des romans.

10. Le procédé de la revendication 9, dans lequel l'obtention de l'ensemble d'objectifs prédéfinis comprend :
le décorticage du matériau source pour extraire l'ensemble d'objectifs prédéfinis.

11. Le procédé de la revendication 9, dans lequel l'obtention de l'ensemble d'objectifs prédéfinis comprend :
la détermination de l'ensemble d'objectifs prédéfinis sur la base d'un type de l'effecteur d'objectif qui est instancié.

12. Le procédé de la revendication 9, dans lequel l'obtention de l'ensemble d'objectifs prédéfinis comprend :
la détermination de l'ensemble d'objectifs prédéfinis sur la base d'une configuration de l'effecteur d'objectif spécifiée par un utilisateur.

13. Le procédé de la revendication 9, dans lequel l'obtention de l'ensemble d'objectifs prédéfinis comprend :
la détermination de l'ensemble d'objectifs prédéfinis sur la base de limites spécifiées par une entité qui détient un objet.

14. Un dispositif comprenant :
un ou plusieurs processeurs ;
une mémoire non transitoire ;
un ou plusieurs afficheurs ; et
un ou plusieurs programmes stockés dans la mémoire non transitoire qui, lorsqu'ils sont exécutés par les un ou plusieurs processeurs, font en sorte que le dispositif :
instancie un effecteur d'objectif en un décor en réalité de synthèse (410), l'effecteur d'objectif étant **caractérisé par** un ensemble d'objectifs prédéfinis et un ensemble d'attributs de restitution visuelle ;
obtienne des informations de contexte caractérisant le décor en réalité de synthèse (420), les informations de contexte comprenant des données correspondant à un décor physique où se trouve le dispositif, les données correspondant au décor physique comprenant une carte maillée du décor physique qui indique des positions et/ou des dimensions d'objets réels qui se trouvent dans le décor physique ;
modifie le décor en réalité de synthèse sur la base des données correspondant au décor physique où se trouve le dispositif, le décor en réalité de synthèse étant modifié pour inclure des représentations en réalité de synthèse des objets réels qui se trouvent dans le décor physique où se trouve le dispositif ;
génère un objectif pour l'effecteur d'objectif (430) sur la base d'une fonction de l'ensemble d'objectifs prédéfinis, les informations de contexte incluant les positions et/ou les dimensions des objets réels qui se trouvent dans le décor physique où se trouve le dispositif, et d'un ensemble d'actions prédéfinies pour l'effecteur d'objectif ;
paramètre des conditions d'environnement (440) pour le décor en réalité de synthèse sur la base de l'objectif pour l'effecteur d'objectif ;
établisse des conditions initiales (450) et un ensemble courant d'actions pour l'effecteur d'objectif sur la base de l'objectif pour l'effecteur d'objectif ; et
manipule l'effecteur d'objectif sur la base de l'objectif (460).

15. Un support ou une mémoire comprenant un ou plusieurs programmes qui, lorsqu'ils sont exécutés par un ou plusieurs processeurs d'un dispositif avec un afficheur, font en sorte que le dispositif :
instancie un effecteur d'objectif en un décor en réalité de synthèse (410), l'effecteur d'objectif étant **caractérisé par** un ensemble d'objectifs prédéfinis et un ensemble d'attributs de restitution visuelle ;
obtienne des informations de contexte caractérisant le décor en réalité de synthèse (420), les informations de contexte comprenant des données correspondant à un décor physique où se trouve le dispositif, les données correspondant au décor physique comprenant une carte maillée du décor physique qui indique des positions et/ou des dimensions d'objets réels qui se trouvent dans le décor physique ;
modifie le décor en réalité de synthèse sur la base des données correspondant au décor physique où se trouve le dispositif, le décor en réalité de synthèse étant modifié pour inclure des représentations en réalité de synthèse des objets réels qui se trouvent dans le décor physique où se trouve le dispositif ;
génère un objectif pour l'effecteur d'objectif (430) sur la base d'une fonction de l'ensemble d'objectifs prédéfinis, les informations de contexte incluant les positions et/ou les dimensions des objets réels qui se trouvent dans le décor physique où se trouve le dispositif, et d'un ensemble d'actions prédéfinies pour l'effecteur d'objectif ;
paramètre des conditions d'environnement (440) pour le décor en réalité de synthèse sur la base de l'objectif pour l'effecteur d'objectif ;
établisse des conditions initiales (450) et un ensemble courant d'actions pour l'effecteur d'objectif sur la base de l'objectif pour l'effecteur d'objectif ; et
manipule l'effecteur d'objectif sur la base de l'objectif (460).
